# FASCICULE DE BREVET EUROPEEN

(11) **EP 0 418 336 B1**
(45) Date de publication et mention de la délivrance du brevet: **29.05.1996**
(21) Numéro de dépôt: 90902289.9
(22) Date de dépôt: 26.01.1990
(51) Int. Cl.: A47J 37/08, H01H 11/06, H01H 37/62, H01H 71/16

(54) **DISPOSITIF POUR SUPPORTER LES ORGANES MECANIQUES ET ELECTRIQUES DE COMMANDE D'UN GRILLE-PAIN ET GRILLE-PAIN COMPORTANT UN TEL DISPOSITIF**
VORRICHTUNG ZUM UNTERSTÜTZEN DER MECHANISCHEN UND ELEKTRISCHEN STEUERORGANE EINES BROTRÖSTERS UND BROTRÖSTER MIT EINER SOLCHEN VORRICHTUNG
DEVICE FOR SUPPORTING THE ELECTRICAL AND MECHANICAL CONTROL ELEMENTS OF A TOASTER AND TOASTER COMPRISING SUCH DEVICE

(30) Priorité: 01.02.1989 FR 8901270; 01.02.1989 FR 8901273; 01.02.1989 FR 8901274; 01.02.1989 FR 8901275; 01.02.1989 FR 8901276
(43) Date de publication de la demande: 27.03.1991
(73) Titulaire: SEB S.A., F-21260 Selongey (FR)
(72) Inventeur: EISENBERG, Roger, F-57157 Marly (FR); DIDIER-LAURENT, Alain, F-88120 Vagney (FR); BALANDIER, Jean-Marie, F-88120 Vagney (FR); ROUSSEAU, Alain, F-88120 Vagney (FR)
(74) Mandataire: Michelet, Alain
(86) Numéro de dépôt international: FR9000057
(87) Numéro de publication internationale: WO9008496

(56) Documents cités:
- CH-A- 379 084
- CH-A- 499 302
- DE-A- 1 515 109
- DE-A- 1 515 110
- FR-A- 1 562 530
- FR-A- 2 353 258
- GB-A- 721 321
- GB-A- 734 301
- US-A- 2 520 873
- US-A- 2 692 929
- US-A- 3 175 482
- US-A- 3 253 535

## Description

La présente invention concerne un dispositif pour supporter les organes mécaniques et électriques d'un appareil électrique notamment d'un grille-pain.

L'invention vise également divers perfectionnements apportés auxdits organes mécaniques et électriques.

Les grille-pain connus comportent généralement trois parties principales à l'intérieur du boîtier de commande, que l'on distingue de la façon suivante :
- un support métallique qui sert de base rigide sur laquelle sont rapportés les organes électriques, et le mécanisme ;
- les organes électriques (temporisateur, interrupteur, raccordement du cordon d'alimentation) constitués de pièces isolantes et métalliques ;
- les liaisons électriques, constituées de conducteurs souples isolés, qui relient les organes électriques à l'aide de connexions généralement réalisées avec des clips et languettes.

Cette construction conduit à un grand nombre de composants dont le montage ne peut être réalisé que par des opérations manuelles ; en particulier le câblage souple et les connexions clipsées. Par ailleurs, chaque organe électrique doit être isolé efficacement du boîtier du grille-pain. D'autre part, tous les organes électriques et mécaniques doivent être réglés après avoir été fixés au grille-pain.

Le brevet américain US-A-3175482 décrit un dispositif adaptable à un grille-pain. Dans le but de simplifier sa conception, ce dispositif comprend une platine non isolante électriquement sur laquelle sont fixés des moyens de commande du support, des moyens d'alimentation électrique et des moyens de coupure de l'alimentation électrique.

Néanmoins, la platine ne comprend pas tous les organes mécaniques et électriques de commande du grille-pain.

Ainsi, le montage reste compliqué et ne peut se faire que manuellement. Et par conséquent, la réalisation reste coûteuse.

D'autre part, la platine n'étant pas isolante électriquement, elle ne peut pas recevoir les organes électriques nus, ce qui nécessite un nombre de pièces plus important pour leur isolation.

De ce fait, les conceptions actuelles de grille-pain sont complexes et coûteuses.

Le but de la présente invention est de remédier aux inconvénients des réalisations connues en créant un dispositif pour supporter les organes mécaniques et électriques qui permette à la fois une réduction des coûts de fabrication et de montage, et un gain de fiabilité.

L'invention vise ainsi un dispositif adaptable à un grille-pain du type vertical comprenant un boîtier renfermant un support pour supporter les tranches de pain et au moins une résistance de chauffage, des moyens étant prévus pour commander le déplacement du support des tranches de pain, des moyens pour verrouiller ledit support en position basse, des moyens d'alimentation électrique de la résistance chauffante, des moyens pour régler la température de chauffage de ladite résistance, des moyens pour couper cette alimentation électrique après une certaine durée de chauffage.

Suivant l'invention, ledit dispositif est caractérisé en ce qu'il comprend une platine en matière électriquement isolante sur laquelle sont fixés les moyens précités, y compris les moyens pour positionner et guider le coulissement du support, cette platine constituant un support isolant pour tous les organes électriques desdits moyens, lesdits moyens étant préréglés et ladite platine comprenant des moyens pour la fixer à l'une des faces latérales dudit boîtier.

Cette platine permet de monter sur elle en usine, tous les moyens ou organes mécaniques et électriques de commande du grille-pain.

Le fait que la platine constitue un support isolant pour tous les organes électriques évite d'avoir à prévoir pour chaque organe une isolation électrique propre qui augmente leur coût.

De plus, tous ces organes sont préréglés sur la platine, avant que celle-ci soit fixée au boîtier du grille-pain, ce qui est beaucoup plus commode.

Selon une version avantageuse de l'invention la platine est en matière plastique et comprend des protubérances ou des languettes moulées dans la matière plastique et en saillie sur l'une des faces de la platine, ces protubérances ou languettes étant conformées pour recevoir et assurer la fixation d'éléments conducteurs ou mécaniques par translation de ces derniers perpendiculairement à la platine.

Cette platine permet de recevoir directement les organes électriques nus, grâce à la nature isolante de la matière et aux aménagements de formes possibles en moulage. Les liaisons électriques peuvent être réalisées avec des lames de métal découpé, dont le montage est automatisable du fait de la stabilité dimensionnelle de ces pièces. La mise en place d'un contact sur ces lames et l'aménagement de forme de celles-ci permettent de réaliser la fonction interrupteur sans autre pièce rapportée et sans connexion.

De plus, cette platine assure le positionnement et le guidage du mécanisme (par exemple celui commandant le chariot d'un grille-pain) de façon simple ; l'aménagement de languettes dans la matière plastique permet des assemblages économiques par clipsage, sans pièces rapportées du type vis ou rivets.

En outre, le logement des composants est réalisé de sorte que ces composants puissent être montés simplement par un mouvement unique de descente verticale automatisable. La forme des logements est facilement réalisable par moulage.

Le dispositif selon l'invention répond ainsi aux objectifs de réduction du coût d'assemblage et d'augmentation de la fiabilité du fait de la diminution du nombre de composants et leur montage automatisable.

Selon une version avantageuse de l'invention, les protubérances ou languettes de la platine en matière plastique, comportent des surfaces d'appui ou des fentes de réception ou d'emboîtement desdits éléments conducteurs ou mécaniques.

Selon une version préférée de l'invention, les languettes ou protubérances présentent des surfaces d'appui ou des lentes aptes à assurer la fixation d'éléments en forme de lames métalliques par emboîtement, encliquetage ou pincement de ces dernières, après translation de ces lames perpendiculairement à la face extérieure de la platine.

Le dispositif visé par l'invention comprend également un chariot destiné à supporter les tranches de pain d'un grille-pain, qui comprend des moyens pour guider le coulissement du chariot entre deux positions et un ressort pour rappeler le chariot vers l'une de ces positions.

Suivant l'invention, les moyens de guidage précités comprennent une tige engagée dans une ou plusieurs ouvertures cylindriques pratiquées dans le chariot et ayant un diamètre correspondant à celui du ressort, ce ressort de rappel étant monté autour d'une tige et engagé dans la ou les ouvertures cylindriques, ce ressort étant emboîté sur l'une des extrémités de la tige, l'extrémité opposée du ressort étant conformée pour qu'elle prenne appui contre l'ouverture adjacente du chariot.

Etant donné que les axes du ressort et de la tige sont confondus, aucun effort parasite transversal à l'axe de la tige n'est engendré, de sorte qu'on évite les risques d'usure et de frottement.

Le dispositif selon l'invention comprend également un dispositif de coupure de l'alimentation électrique de la résistance chauffante comprenant un bilame relié à une lame conductrice connectée à la résistance électrique et flexible dans une zone située près du bilame et dont l'extrémité opposée à ce dernier est en appui élastique sur un organe conducteur relié à l'alimentation électrique, cette extrémité pouvant glisser sur cet organe sous l'effet de la déformation du bilame, des moyens étant prévus pour écarter la lame dudit organe conducteur après une course de glissement prédéterminée de cette lame sur l'organe précité.

Selon une version avantageuse de l'invention, les moyens pour écarter la lame comprennent un évidement ménagé dans celle-ci et un organe prenant appui sur la lame à l'opposé dudit organe conducteur et pouvant s'engager dans ledit évidement après ladite course de glissement prédéterminée, de telle sorte que la lame puisse fléchir par rappel élastique vers l'organe engagé dans l'évidement et s'écarter ainsi de l'organe conducteur.

Le dispositif selon l'invention comprend d'autre part des moyens pour régler le fonctionnement du bilame associé à une résistance électrique de chauffage assurant l'incurvation de ce bilame, l'une des extrémités de ce bilame coopérant avec des organes électriques et mécaniques pour commander la coupure de l'alimentation électrique de ladite résistance et pour déclencher lesdits organes mécaniques.

Ce dispositif est caractérisé en ce que l'une des extrémités du bilame est montée pivotante sur un axe fixe et porte un organe engagé dans une fente ménagée dans un corps monté coulissant dans la direction de la longueur du bilame, cette fente s'étendant sensiblement dans cette direction et délimitant une rampe supérieure sur laquelle prend appui ledit organe lorsque le bilame est au repos et une rampe inférieure sur laquelle prend appui ledit organe lorsque le bilame atteint un certain stade d'incurvation, ces rampes formant des pentes différentes et prédéterminées par rapport au bilame.

Selon une version avantageuse de l'invention, la pente de la rampe inférieure est déterminée pour régler par coulissement du corps la durée du maintien de l'alimentation électrique assurant le chauffage de la résistance et la pente de la rampe supérieure est déterminée pour modifier la distance comprise entre les deux rampes et régler le point de déclenchement des organes mécaniques lors du refroidissement de la résistance.

Ainsi, à chaque réglage de la durée du maintien de l'alimentation électrique assurant le chauffage de la résistance, correspond une certaine distance entre les deux rampes, et par suite, un réglage du point de déclenchement, c'est-à-dire la remontée du chariot du grille-pain.

Le dispositif selon l'invention comprend en outre des moyens mécaniques de verrouillage et déverrouillage du chariot porte-pains monté coulissant verticalement dans le grille-pain, ce dispositif assurant le verrouillage du chariot en position basse et la remontée de celui-ci étant assurée par un ressort de rappel.

Suivant l'invention, ces moyens comprennent une bielle supérieure articulée à une bielle inférieure, l'extrémité de la bielle supérieure opposée à l'articulation commune étant articulée en un point fixe et l'extrémité de la bielle inférieure opposée à l'articulation commune étant articulée au chariot, un levier intermédiaire s'étendant transversalement à la bielle supérieure étant articulé à cette dernière contre l'action d'un ressort, l'extrémité de ce levier comprenant un bec susceptible de s'accrocher à un cran de retenue fixe lorsque le chariot est déplacé en position inférieure, ce verrouillage étant maintenu par la force exercée vers le haut du ressort de rappel du chariot et des moyens étant prévus pour appliquer une traction à l'extrémité du levier intermédiaire pour faire pivoter celui-ci et déverrouiller le bec par rapport au cran afin de permettre la remontée du chariot.

Ainsi, il suffit d'appliquer une légère traction verticale à l'extrémité du levier intermédiaire précité pour commander la remontée du chariot.

D'autres particularités et avantages de l'invention apparaîtront encore dans la description ci-après.

Aux dessins annexés, donnés à titre d'exemples non limitatifs :
- la figure 1 est une vue en perspective partielle d'un grille-pain muni d'une platine latérale destinée à supporter des connexions électriques,
- la figure 2 est une vue en plan d'une platine d'un grille-pain supportant le chariot coulissant destiné à remonter les tranches de pain,
- la figure 3 est une vue en plan éclatée montrant le chariot, son ressort de rappel et sa tige de guidage,
- la figure 4 est une vue en plan du dispositif de commande mécanique et électrique du chariot, celui-ci étant en position haute,
- la figure 5 est une vue analogue à la figure 4, le chariot étant en position basse,
- la figure 6 est une vue analogue à la figure 5, montrant l'action du bilame sur la lame de commande du déclenchement du mécanisme de remontée du chariot,
- la figure 7 est une vue en plan de la lame de commande,
- la figure 8 est une vue en perspective éclatée du dispositif de commande mécanique et électrique du chariot,
- la figure 9 est un diagramme de fonctionnement.

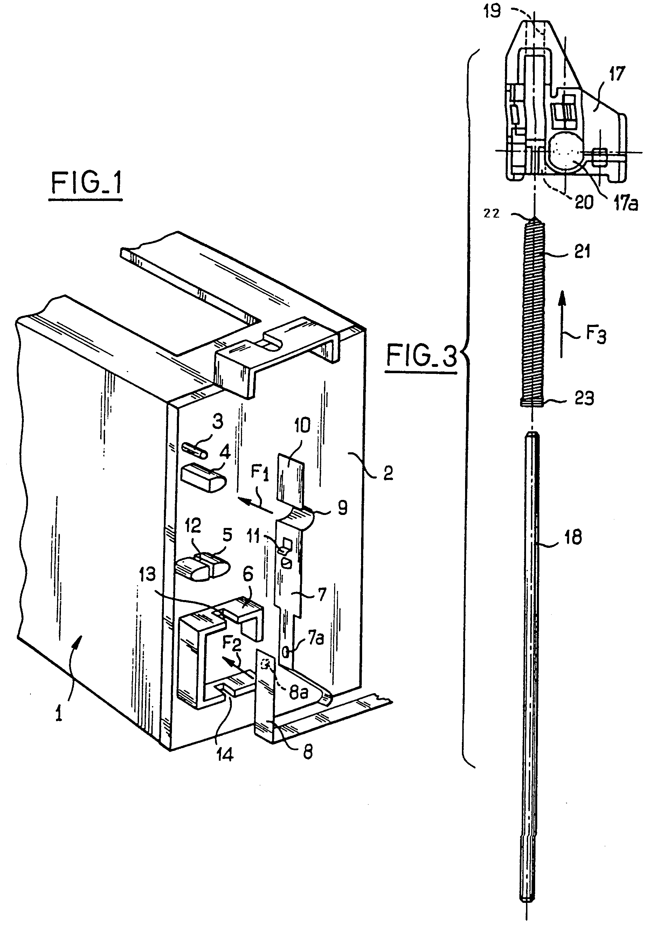

Dans la réalisation de la figure 1, le grille-pain 1 comporte sur l'une de ses faces latérales d'extrémité une platine 2 moulée en matière plastique et dont les dimensions correspondent sensiblement à celles de ladite face latérale.

Cette platine 2 en matière plastique électriquement isolante sert à la fois de support mécanique et électrique.

Dans l'exemple représenté, la platine 1 présente sur sa face extérieure un certain nombre de languettes ou protubérances 3, 4, 5, 6 moulées en même temps que la platine destinées à recevoir et à positionner directement (sans isolant ou pièce de fixation supplémentaire) des lames de contact et de connexion métalliques telles que 7, 8. Ces lames 7, 8 servent à commander le fonctionnement du grille-pain par l'intermédiaire d'un dispositif de temporisation non représenté sur la figure 1.

Les languettes ou protubérances 3, 4, 5, 6 ménagées sur la platine 2 sont conformées pour pouvoir être démoulées par extraction dans une direction perpendiculaire à la platine 2.

De même, ces languettes ou protubérances 3, 4, 5, 6 sont conformées pour recevoir et positionner les lames 7, 8 par un simple mouvement de celles-ci perpendiculairement à la platine 2 (voir flèche F₁ et F₂). Ce mouvement peut être exécuté très simplement par un robot ou un bras manipulateur.

Ainsi, la lame 7 présente une partie pliée en U 9 qui vient s'appliquer sur une surface complémentaire de la protubérance 4, tandis que l'extrémité 10 de cette lame 7 vient prendre appui contre la languette 3 située au-dessus de la protubérance 4.

La lame 7 comporte sous la partie en U 9 deux languettes élastiques 11 qui viennent s'encliqueter sur la partie droit de la protubérance 5 qui est séparée de la partie gauche de celle-ci par une fente 12 qui reçoit la lame 7 proprement dite. Cette lame 7 s'engage également dans la fente supérieure 13 ménagée dans la protubérance 6 en forme de cuvette rectangulaire. La fente inférieure 14 de cette protubérance 6 reçoit la lame 8.

Les lames 7 et 8 présentent en regard l'une de l'autre des contacts 7a, 8a aptes à établir un contact électrique entre ces deux lames lorsqu'elles sont sollicitées l'une vers l'autre.

Les languettes et protubérances 3, 4, 5, 6 assurent un positionnement extrêmement précis des lames 7, 8 l'une par rapport à l'autre, ce qui assure une excellente fiabilité, tout en permettant un moulage facile et sans pièces supplémentaires telles que vis ou analogue.

Bien entendu, la platine 2 peut comporter d'autres protubérances ou évidements facilement moulables pouvant recevoir d'autres organes ou accessoires dont la mise en place est également robotisable.

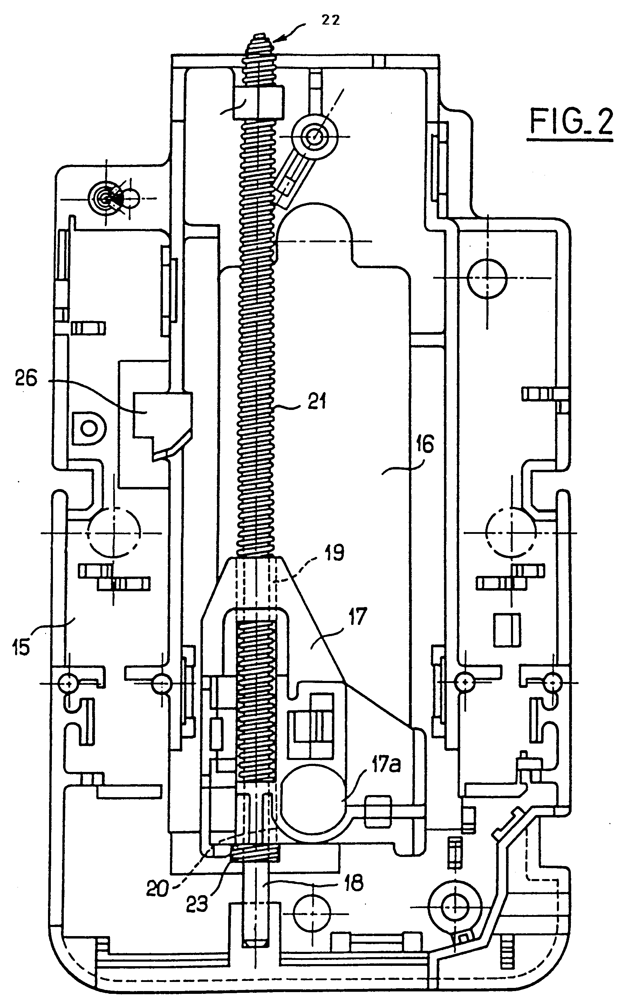

Dans la réalisation de la figure 2, la platine 15 qui est prévue sur l'une des faces d'extrémité du grille-pain présente un évidement central 16.

Dans cet évidement 16 est monté un chariot 17 coulissant verticalement du bas vers le haut et vice-versa. Ce chariot 17 est manoeuvrable par un organe de préhension non représenté, fixé dans l'orifice 17a.

Sur la figure 2, le chariot 17 est en position basse. Ce chariot 17 supporte un bras horizontal (non représenté) qui supporte les tranches de pain à griller.

Le chariot 17 est guidé dans son mouvement de coulissement vertical par une tige verticale 18 qui est engagée dans des ouvertures cylindriques 19, 20 ménagées en haut et en bas du chariot 17. Ces ouvertures 19, 20 ont un diamètre nettement supérieur à celui de la tige 18, correspondant en fait au diamètre du ressort hélicoïdal 21 monté sur la tige 18. Ce ressort 21 s'étend pratiquement sur toute la hauteur de la platine 15. Son extrémité supérieure 22 est conique et est emboîtée à la partie supérieure de la tige 18, alors que son extrémité inférieure présente un diamètre élargi 23 qui vient en butée contre le pourtour de l'ouverture inférieure 20 du chariot 17.

Dans la position représentée sur la figure 2, le chariot 17 est en position basse et le ressort 21 est tendu. Le chariot 17 est verrouillé dans cette position par un organe non représenté sur la figure 2. Lorsque cet organe est déverrouillé, le chariot 17 est rappelé vers le haut par le ressort 21, ce qui remonte en même temps les tranches de pain.

Lors du déplacement du chariot 17, le ressort 21, outre sa fonction de rappel, sert également de portée de coulissement. Etant donné que les efforts s'exercent exactement dans l'axe de la tige 18, le chariot 17 n'est soumis à aucun couple tendant à provoquer des frottements, et une usure des portées du chariot.

De plus, étant donné que le ressort 21 est coaxial à la tige 18, la structure de l'ensemble est très compacte.

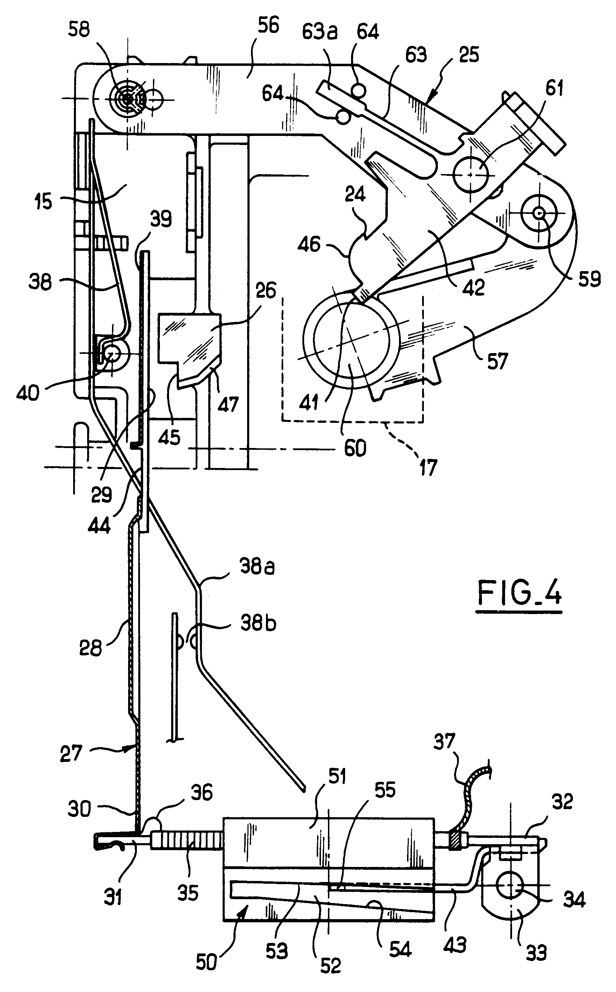

La figure 3 illustre le montage de l'ensemble tige 18, ressort 21 et chariot 17.

Dans un premier temps, on monte le ressort 21 dans les ouvertures 20 et 19 du chariot 17 dans le sens de la flèche F₃. Cette introduction est facilitée par le fait que l'extrémité supérieure 22 du ressort 21 est conique.

La partie arrière élargie 23 du ressort 21 permet de l'arrêter sous l'ouverture 20 du chariot 17.

Il suffit ensuite d'engager la tige 18 dans le ressort 21 en place dans le chariot.

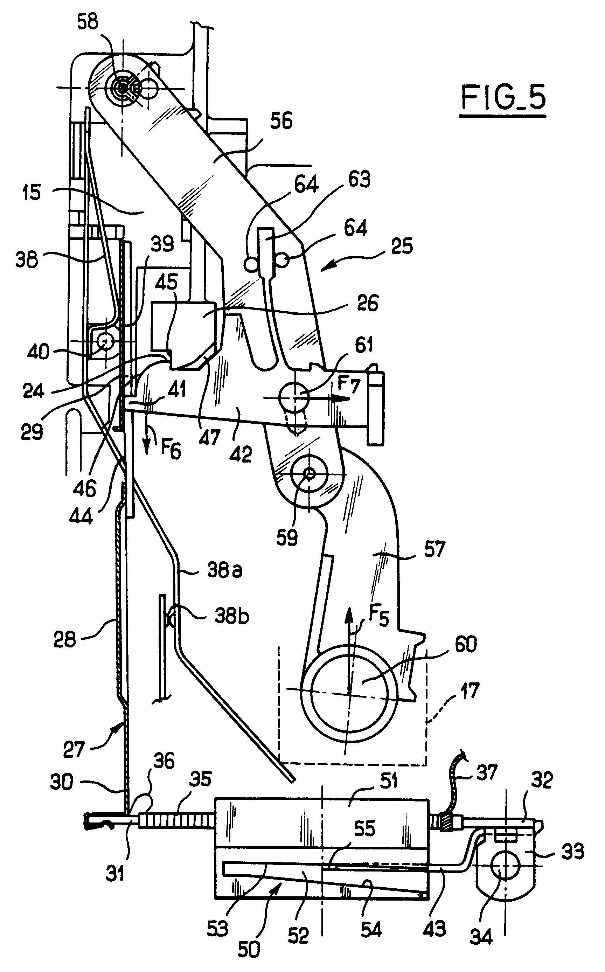

Dans la réalisation des figures 4 et 5, on a représenté le système de commande du déplacement du chariot 17 (représenté en pointillé). On rappellera tout d'abord les principes connus. Dans la position de repos, représentée sur la figure 4, le chariot 17 est en position haute. Lorsque l'utilisateur désire griller des tranches de pain, il met le chariot 17 en position basse. Dans le présent mode de réalisation, et comme indiqué sur la figure 5, le ressort 21 (voir figure 2) associé au chariot 17 est tendu et ce chariot est verrouillé grâce au bec 24 porté par un mécanisme 25 solidaire du chariot 17, en prise avec un organe d'arrêt 26 solidaire de la platine 15 (voir également figure 2). Le mécanisme 25 sera décrit en détail plus loin.

On va maintenant décrire le dispositif qui permet de commander le déverrouillage du chariot 17, lorsque les tranches de pain sont suffisamment grillées.

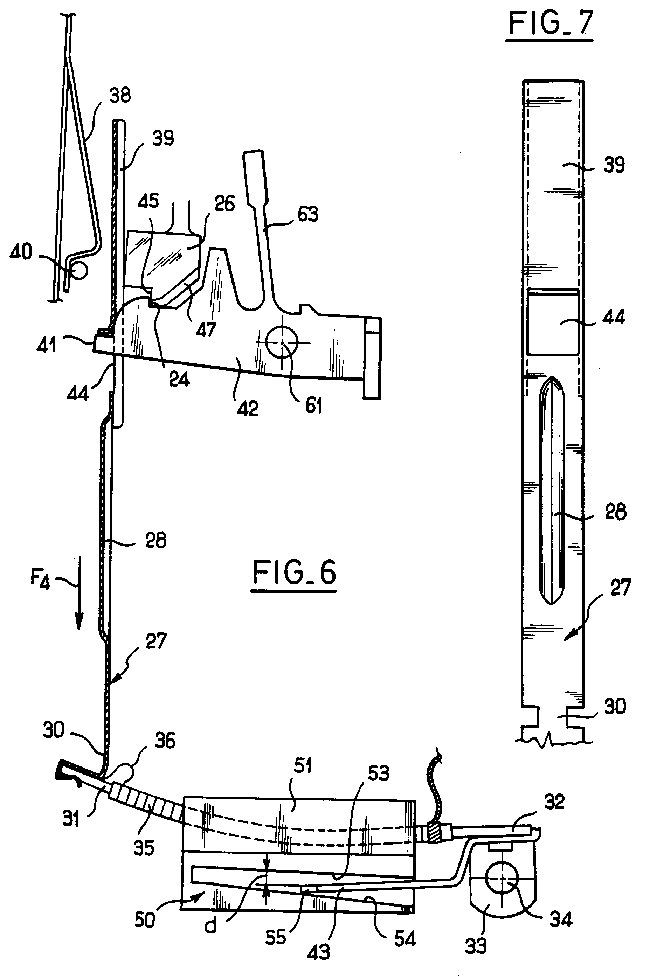

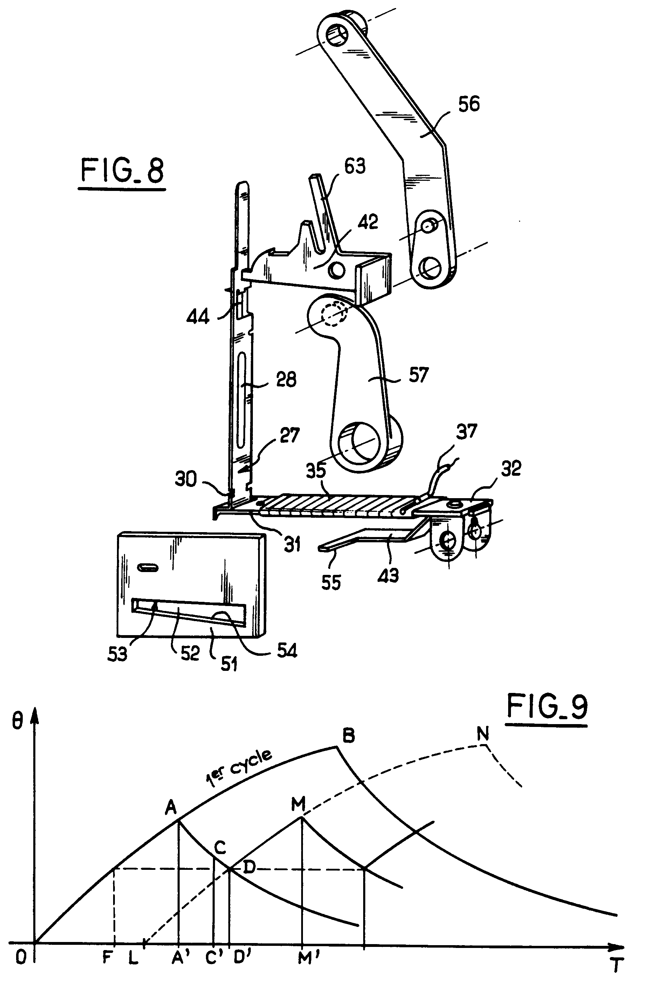

Ce dispositif comprend une lame métallique 27 s'étendant verticalement et rigidifiée sur la quasi-totalité de sa longueur grâce à une nervure matricée 28 (voir notamment figures 7 et 8) prolongée par une partie supérieure de section en U 39. L'extrémité inférieure 30 de la lame 27 est rétrécie de façon à localiser la flexion de cette lame à ce niveau.

L'extrémité inférieure de la lame 27 est rendue solidaire d'un bilame 31 s'étendant sensiblement perpendiculairement à la lame 27.

L'extrémité 32 du bilame 31 comporte une patte 33 articulée sur un axe 34 solidaire de la platine 15.

Autour du bilame 31 est enroulée une résistance électrique chauffante 35 connectée électriquement entre un fil conducteur nu 36 en contact avec la lame 27 et un fil conducteur isolé 37.

La mise en circuit et hors circuit de la résistance chauffante 35 est réalisée par coopération entre une lamelle élastique de connexion 38 et la partie supérieure 39 de la lame 27.

Le déplacement de la lamelle 38 vers la partie 39 précitée est limité par une butée fixe 40.

Dans la position représentée sur la figure 4, la partie supérieure 39 de la lame 27 est écartée de la lamelle 38 et le chariot 17 est en position haute. La résistance chauffante 35 n'est pas alimentée.

Dans la position représentée sur la figure 5, le chariot 17 est en position basse et un ergot 41 ménagé sur l'extrémité du bras 42 du mécanisme 25 prend appui sur la lame 27 et maintient l'extrémité 39 de celle-ci en contact avec la lamelle 38.

En outre, le chariot 17 prend appui sur une barre de connexion 38a reliée à la lamelle 38, fermant ainsi un interrupteur électrique 38b assurant l'alimentation électrique de la barre de connexion 38a.

La résistance chauffante 35 est de ce fait alimentée en courant électrique.

Cette résistance chauffante 35 échauffe alors le bilame 31. Celui-ci s'incurve et provoque la montée de la lame 27 (voir figure 6), étant entendu qu'un organe 43 qui sera décrit plus loin limite le pivotement du bilame 31 autour de l'axe 34.

Durant la montée de la lame 27, la partie 39 de celle-ci glisse sur la lamelle élastique 38 et l'alimentation électrique de la résistance 35 est maintenue jusqu'à ce que l'ergot 41 du bras 42 pénètre dans une fenêtre 44 ménagée dans la lame 27 (Voir également la figure 7).

Du fait de cet engagement, la lame 27 fléchit élastiquement vers le bras 42 et la partie 39 de la lame s'écarte de la lamelle 38 et prend appui contre la butée 26. La résistance chauffante 35 est alors mise hors circuit.

L'alimentation électrique de la résistance 35 étant coupée, le bilame 31 tend à reprendre sa position de repos. Lors de ce déplacement, la lame 27 est tirée dans le sens de la flèche F₄. Etant donné que l'ergot 41 du bras 42 est retenu dans la fenêtre 44 de la lame, cet ergot 41 est tiré vers le bas, ce qui provoque le basculement du bras 42, le dégagement du bec 24 du cran de retenue 45 de la butée 26,l'échappement de l'ergot 41 de la fenêtre 44, et la remontée du chariot 17 sous l'action du ressort de rappel 21.

Pour remettre le grille-pain en position de fonctionnement, il suffit de rabaisser manuellement le chariot 17 jusqu'à la position indiquée sur la figure 5, dans laquelle le bec 24 du bras 42 vient s'accrocher au cran de retenue 45 de la butée 26. Ce mode de verrouillage est facilité par le fait que l'extrémité du bras 42 comporte entre l'ergot 41 et le bec 24 une surface courbe 46 qui peut glisser sur une rampe inclinée 47 ménagée sur la butée 26 en amont du cran de retenue 47.

Lorsque cette remise en position de fonctionnement est effectuée peu de temps après la remontée automatique du chariot 17, le bilame 31 n'est pas revenu à la température ambiante et de ce fait n'a pas entièrement retrouvé sa position de repos.

Dans ce cas, la distance existant entre la fenêtre 44 et l'ergot 41 du bras 42 est plus faible que dans le cas où le bilame 31 a entièrement repris sa forme et position initiale.

Ainsi, après mise en circuit de la résistance de chauffage du bilame 31, celui-ci va très rapidement reprendre la position représentée sur la figure 6, dans laquelle l'ergot 41 s'engage dans la fenêtre 44 et après quoi la résistance 35 est mise hors circuit et le chariot 17 remonte. Dans ce cas, les tranches de pain portées par le chariot 17 ont été insuffisamment exposées au rayonnement des résistances situées dans le grille-pain et de ce fait ne sont pas suffisamment grillées.

Pour remédier à cet inconvénient, l'invention prévoit un système de compensation 50 que l'on va maintenant décrire.

Le terme "compensation" définit le temps que l'appareil doit déduire automatiquement du réglage du grille-pain, après une première mise en service, pour obtenir le même grillage du pain lors de la deuxième mise en service, puis des Nièmes suivantes. En effet, lors du départ à froid, le temps de grillage est, par exemple, pour un grillage moyen (indice 3), de 160˝. Après 20˝ d'arrêt (enlèvement du pain grillé et rechargement), le grille-pain est remis en marche. Le temps de fonctionnement doit alors être de 120˝ pour obtenir le même grillage du pain. La compensation est, dans ce cas de 25%.

Cette compensation est obtenue de construction. Le refroidissement du bilame, et donc sa déflexion, est une image du refroidissement de la carcasse du grille-pain (barreaux chauffants, réflecteurs, grille, carrosserie, et autres).

Pour un système thermique idéal, les courbes de montée en température ainsi que les courbes de refroidissement sont répétitives.

Ces courbes sont illustrées par la figure 9 qui représente en ordonnées la température Θ et en abscisses le temps T.

Sur cette figure, les lettres utilisées désignent respectivement :
- OAB: première courbe de montée en température (indice de réglage : 6)
- A: coupure de la chaufferette 31 (et des barreaux chauffants) pour l'indice de réglage: 1
- OA': temps de 1ère chauffe, pour l'indice de réglage 1
- AC: refroidissement de la chaufferette
- C: remontée du chariot (fin de cycle)
- D: réarmement
- C'D': temps nécessaire au déchargement-rechargement
- OF: représente la compensation thermique
- LMN: courbe de montée en température, dont le tronçon DM est utilisé lors de la Nième mise en marche.

En réalité, vient s'ajouter au simple refroidissement un phénomène d'hystérésis du bimétal, propre à la matière et aux épaisseurs de ses composants, à la liaison moléculaire entre ceux-ci, et à d'autres raisons. Cette hystérésis est d'autant plus élevée que la température du bilame est élevée. Elle vient s'ajouter au temps de compensation dû à la température de réenclenchement.

Le système 50 comprend un organe 51 situé en regard du bilame 31 et monté coulissant dans des glissières horizontales non représentées. L'organe 51 comporte une fente 52 s'étendant sensiblement dans la direction du bilame 31 et sous celui-ci. Cette fente 52 délimite une rampe supérieure 53 et une rampe inférieure 54.

Dans cette fente 52 est engagé un bras 43 rendu solidaire de l'extrémité 32 du bilame adjacent à la patte articulée 33. L'extrémité de ce bras 43 porte un talon 44 qui prend appui soit sur la rampe supérieure 53, lorsque le bilame 32 est au repos (voir figures 4 et 5), soit sur la rampe inférieure 54 lorsque le bilame est incurvé (voir figure 6).

Ainsi, au début du chauffage de la résistance 35, l'incurvation du bilame 31 n'entraîne aucun déplacement vers le haut de la lame 27, car pendant cette période, le bilame 31 s'incurve en déplaçant le talon 55 du bras 43 de la rampe supérieure 53 vers la rampe inférieure 54 par pivotement autour de l'axe 34. Ainsi, ce n'est que lorsque le talon 53 prend appui sur la rampe inférieure 54 que l'incurvation subséquente du bilame 31 entraîne un déplacement vers le haut de la lame 27.

Par conséquent, la distance d (voir figure 6) comprise entre le talon 55 et la rampe supérieure 55 détermine la durée pendant laquelle l'incurvation du bilame 31 ne produit aucun déplacement de la lame 27.

Il en résulte donc que lorsque le bilame 31 est froid, c'est-à-dire non incurvé (voir figures 4 et 5), la durée pendant laquelle le chariot 17 est en position basse (et pendant laquelle les tranches de pain sont exposées au rayonnement des résistances) est égal à la durée nécessaire pour déplacer le talon 55 selon la distance d, plus celle nécessaire pour déplacer la lame 27 jusqu'à ce que l'ergot 41 s'engage dans la fenêtre 44.

En revanche, lorsqu'après une première utilisation, le chariot 17 est remis en position basse et que le bilame 31 est encore chaud et incurvé, de sorte que le talon 55 est en appui sur la rampe inférieure 54, la durée précitée est réduite à celle nécessaire pour déplacer la lame 27.

Compte tenu de la pente des rampes 54 et 55, la distance d précitée varie en fonction de la position du talon 55 par rapport à ces rampes. Cette distance d peut être réglée en déplaçant le bloc 51 vers la droite ou vers la gauche, ce qui a pour effet de régler le temps de grillage des tranches de pain.

La rampe inférieure 54 permet de régler l'inclinaison du bilame 31, et donc de déterminer le temps du maintien sous tension de la chaufferette 35 et des barreaux chauffants du grille-pain. La rampe supérieure 53 dont la pente est inférieure à celle de la rampe 54 permet de modifier le point d'arrêt de cycle sur la courbe de refroidissement, ce qui agit sur la compensation par modification de la température de reprise au cycle suivant. Elle présente une pente telle que, pour un réglage de durée longue, le talon 55 ne puisse pas remonter aussi haut que pour une durée courte.

Pour résumer, la rampe 54 permet de régler le temps de chauffe, tandis que la contre-rampe 53 permet de modifier le point de coupure dans la courbe de refroidissement.

Une autre particularité importante de l'invention réside dans la structure du mécanisme 25 associé au chariot 17.

Il s'agit d'un mécanisme à genouillère. Ce mécanisme se compose de deux bielles 56 et 57 articulées, parallèles à la platine 15 (voir figures 4, 5 et 8).

La bielle supérieure 56 a son extrémité articulée en 58 à la platine. Son extrémité opposée est reliée par une articulation 59 à la bielle inférieure 57 qui est elle-même reliée par une articulation 60 au chariot 17. Comme déjà indiqué précédemment, ce chariot 17 peut coulisser verticalement, son déplacement étant guidé par la tige 18 (voir figure 2).

Le levier intermédiaire 42 s'étend transversalement à la bielle supérieure 56 et il est relié à celle-ci par un tourillon 61. La rotation du levier 42 est limitée par un bras ressort 63 transversal à ce dernier s'étendant dans la direction de la bielle 56 et dont l'extrémité 63a est guidée entre deux saillies 64 solidaires du levier 56. Comme déjà décrit précédemment, l'extrémité du levier intermédiaire 42 présente une surface courbe 46 en arrière de laquelle est pratiqué un bec d'accrochage 24 susceptible de se verrouiller à un cran de retenue 45 ménagé sur une butée 26, comme indiqué sur la figure 5.

Dans la position indiquée sur la figure 5, la force F₅ exercée par le ressort du chariot 17 tend à ramener celui-ci vers le haut. Le point d'articulation 59 des bielles 56 et 57 étant situé en-deça de la ligne rejoignant les articulations extrêmes 58 et 60, cette force F₅ donne naissance à une résultante horizontale F₇ (voir figure 5), qui, ramenée au niveau du levier intermédiaire 42, tend à appliquer le cran 45 contre le bec 24..

Le déverrouillage du bec 24 par rapport au cran 45 est assuré en tirant l'extrémité du levier 42 vers le bas (voir flèche F₆ sur la figure 5).

Sous l'effet de cette force F₆, le levier 42 pivote légèrement autour de 61 contre l'action du rappel exercé par le bras ressort 63.

La force nécessaire pour faire pivoter le levier 42 est de l'ordre de 60 et 100 g. Comme déjà expliqué précédemment, cette force est engendrée lors du refroidissement du bilame 31 qui génère une traction vers le bas de la lame 27.

Après pivotement du levier 42, le mécanisme 25 prend la position représentée sur la figure 4. Pour reverrouiller le chariot 17 en position basse, il suffit de tirer ce dernier vers le bas au moyen de la poignée prévue à cet effet, ce qui amène automatiquement l'extrémité du levier 42 en regard de la butée 26. En poursuivant le mouvement, la partie courbe 46 de l'extrémité du levier 42 glisse sur la rampe 47 de la butée, ce qui entraîne une déformation élastique du bras ressort 63 et en fin de course le bec 24 vient s'accrocher au cran de retenue 45.

Bien entendu, l'invention n'est pas limitée aux exemples de réalisation que l'on vient de décrire et on peut apporter à ceux-ci de nombreuses modifications sans sortir du cadre de l'invention. Entre autres, le levier 42 peut tout aussi bien être monté tourillonnant sur la bielle 57, ou directement sur l'axe 59 commun aux deux bielles. Ce levier peut aussi être supprimé et remplacé par un dispositif de retenue de l'axe 59, tel qu'un aimant ou un électroaimant.

## Revendications

1. Dispositif adaptable à un grille-pain du type vertical comprenant un boitier (1) renfermant un chariot (17) pour supporter les tranches de pain et au moins une résistance de chauffage, des moyens (31) étant prévus pour commander le déplacement du chariot des tranches de pain, des moyens (25) pour verrouiller ledit support en position basse, des moyens d'alimentation électrique de la résistance chauffante, des moyens pour régler la température de chauffage de ladite résistance, des moyens pour couper cette alimentation électrique après une certaine durée de chauffage, caractérisé en ce que ledit dispositif comprend une platine (2) en matière électriquement isolante sur laquelle sont fixés les moyens précités, y compris les moyens pour positionner et guider le coulissement du chariot (17), cette platine constituant un support isolant pour tous les organes électriques desdits moyens, lesdits moyens étant préréglés et ladite platine (2) comprenant des moyens pour la fixer à l'une des faces latérales dudit boitier (1).

2. Dispositif conforme à la revendication 1, caractérisé en ce que la platine (2) est en matière plastique et comprend des protubérances ou des languettes (3, 4, 5, 6) moulées dans la matière plastique et en saillie sur l'une des faces de la platine (2), ces protubérances ou languettes étant conformées pour recevoir et assurer la fixation d'éléments conducteurs (7, 8) ou mécaniques par translation de ces derniers perpendiculairement à la platine (2).

3. Dispositif conforme à la revendication 2, caractérisé en ce que lesdites protubérances ou languettes (3, 4, 5, 6) comportent des surfaces d'appui ou des fentes (12, 13, 14) de réception ou d'emboîtement desdits éléments conducteurs (7, 8) ou mécaniques.

4. Dispositif conforme à l'une des revendications 2 ou 3, caractérisé en ce que lesdits éléments sont constitués par des lames métalliques découpées (7, 8).

5. Dispositif conforme à la revendication 4, caractérisé en ce que les languettes ou protubérances (3, 4, 5, 6) présentent des surfaces d'appui ou des fentes aptes à assurer la fixation desdites lames (7, 8) par emboîtement, encliquetage ou pincement de ces dernières, après translation de ces lames perpendiculairement à la face extérieure de la platine (2).

6. Dispositif conforme à l'une des revendications 4 ou 5, caractérisé en ce qu'il comprend au moins deux lames métalliques (7, 8) fixées en regard l'une de l'autre de façon à constituer un interrupteur électrique.

7. Dispositif conforme à l'une des revendications 1 à 6, comprenant un chariot (17) destiné à supporter les tranches de pain, ce dispositif comprenant des moyens pour guider le coulissement du chariot (17) entre deux positions et un ressort (21) pour rappeler le chariot vers l'une de ces positions, caractérisé en ce que les moyens de guidage comprennent une tige (18) engagée dans une ou plusieurs ouvertures cylindriques (19, 20) pratiquées dans le chariot (17) et en ce que le ressort de rappel (21) est monté autour de la tige (18) et engagé dans la ou les ouvertures cylindriques (19, 20).

8. Dispositif conforme à la revendication 7, caractérisé en ce que la partie supérieure du ressort (21) est conformée pour s'emboîter sur la partie supérieure de la tige (18).

9. Dispositif conforme à la revendication 7, caractérisé en ce que l'extrémité inférieure (23) du ressort (21) est conformée pour qu'elle prenne appui contre l'ouverture adjacente (20) du chariot (17).

10. Dispositif conforme à la revendication 9, caractérisé en ce que ladite extrémité du ressort (21) comporte un élargissement (23).

11. Dispositif conforme à la revendication 10, caractérisé en ce que l'extrémité (22) du ressort (21) opposée à l'élargissement (23) est conique.

12. Dispositif conforme à l'une des revendications 1 à 11, les moyens de coupure de l'alimentation électrique de la résistance chauffante comprenant un bilame (31) associé à une résistance électrique chauffante (35) adaptée pour permettre une déformation dudit bilame (31) sous l'effet de la chaleur engendrée par ladite résistance (35), ledit bilame coopérant avec un interrupteur électrique (38, 39) pour couper l'alimentation électrique de cette résistance (35) à un certain stade de la déformation de ce bilame (31), caractérisé en ce que le bilame (31) est relié à une lame conductrice (27) connectée à la résistance électrique (35) et dont l'extrémité (39) opposée à ce dernier est en appui élastique sur un organe conducteur (38) relié à l'alimentation électrique, cette extrémité (39) pouvant glisser sur cet organe (38) sous l'effet de la déformation du bilame (31), des moyens étant prévus pour écarter la lame (39) dudit organe conducteur (38) après une course de glissement prédéterminée de cette lame sur l'organe précité.

13. Dispositif conforme à la revendication 12, caractérisé en ce que les moyens pour écarter la lame (39) comprennent un évidement (44) ménagé dans celle-ci et un organe (41) prenant appui sur la lame (39) à l'opposé dudit organe conducteur (38) et pouvant s'engager dans ledit évidement (44) après ladite course de glissement prédéterminée, de telle sorte que la lame (39) puisse fléchir par rappel élastique vers l'organe (41) engagé dans l'évidement (44) et s'écarter ainsi de l'organe conducteur (38).

14. Dispositif conforme à l'une des revendication 12 ou 13, caractérisé en ce qu'il coopère avec des moyens pour commander automatiquement la remontée du chariot (17) supportant les tranches de pain.

15. Dispositif conforme à la revendication 14, caractérisé en ce que ledit organe (41) susceptible de s'engager dans l'évidement (44) de la lame (27) fait partie du mécanisme (25) de commande de la remontée du chariot (17), ledit organe (41) étant agencé pour commander cette remontée lorsqu'une traction déterminée est exercée sur lui.

16. Dispositif conforme à la revendication 15, caractérisé en ce que l'engagement dudit organe (41) dans l'évidement (44) de la lame (27) est agencé pour assurer un verrouillage, de telle sorte que la déformation inverse subie par le bilame (31) lors de son refroidissement engendre une traction sur la lame (27) ainsi que sur l'organe (41) verrouillé à celle-ci.

17. Dispositif conforme à l'une des revendications 12 à 16, caractérisé en ce que la lame conductrice (27) est rigide sur la plus grande partie de sa longueur et présente un rétrécissement (30) à son extrémité reliée au bilame (31) permettant à cette lame d'être flexible dans cette zone.

18. Dispositif conforme à l'une des revendications 13 à 17, caractérisé en ce que l'évidement (44) est une fenêtre ménagée dans la lame (27).

19. Dispositif conforme à l'une des revendications 1 à 18, comprenant des moyens (50) pour régler le fonctionnement d'un bilame (31) associé à une résistance électrique (35) de chauffage assurant l'incurvation de ce bilame, l'une des extrémités de ce bilame coopérant avec des organes électriques (38, 39) et mécaniques (25) pour commander la coupure de l'alimentation électrique de ladite résistance et pour déclencher lesdits organes mécaniques, caractérisé en ce que l'autre extrémité (32) du bilame (31) est montée pivotante sur un axe fixe (34) et porte un organe (43) engagé dans une fente (52) ménagée dans un corps (51) monté coulissant dans la direction de la longueur du bilame (31), cette fente (52) s'étendant sensiblement dans cette direction et délimitant une rampe supérieure (53) sur laquelle prend appui ledit organe (43) lorsque le bilame (31) est ou revient au repos et une rampe inférieure (54) sur laquelle prend appui ledit organe (43) lorsque le bilame (31) atteint un certain stade d'incurvation, ces rampes (53, 54) formant des pentes différentes et prédéterminées par rapport au bilame (31).

20. Dispositif conforme à la revendication 19, caractérisé en ce que la pente de la rampe inférieure (54) est déterminée pour régler par coulissement du corps (51) la durée du maintien de l'alimentation électrique assurant le chauffage de la résistance (35).

21. Dispositif conforme à la revendication 20, caractérisé en ce que la pente de la rampe supérieure (53) est déterminée pour régler le point de déclenchement des organes mécaniques lors du refroidissement de la résistance (35).

22. Dispositif conforme à l'une des revendications 1 à 21, comprenant des moyens mécaniques (25) de verrouillage et déverrouillage d'un chariot porte-pains (17), monté coulissant verticalement dans le grille-pain, ces moyens (25) assurant le verrouillage du chariot (17) en position basse et la remontée de celui-ci étant assurée par un ressort de rappel et étant caractérisé en ce qu'il comprend une bielle supérieure (56) articulée à une bielle inférieure (57), l'extrémité de la bielle supérieure (56) opposée à l'articulation commune (59) étant articulée en un point fixe (58) et l'extrémité de la bielle inférieure (57) opposée à l'articulation commune (59) étant articulée au chariot (17), et en ce qu'un moyen de retenue coopère avec l'une ou l'autre bielle (56, 57) ou avec leur axe (59) d'articulation pour maintenir momentanément le chariot (17) en fonction basse.

23. Dispositif conforme à la revendication 22, caractérisé en ce que ledit moyen est un levier intermédiaire (42) s'étendant transversalement à la bielle supérieure (56) est articulé à ce dernier contre l'action d'un ressort (63), l'extrémité de ce levier (42) comprenant un bec (24) susceptible de s'accrocher à un cran de retenue fixe (45) lorsque le chariot (17) est déplacé en position basse, ce verrouillage étant maintenu par la force exercée vers le haut du ressort de rappel du chariot (17), des moyens (27, 44) étant prévus pour appliquer une traction (F₆) à l'extrémité du levier intermédiaire (42) pour faire pivoter celui-ci et déverrouiller le bec (24) par rapport au cran (45) afin de permettre la remontée du chariot (17).

24. Dispositif conforme à la revendication 22, caractérisé en ce qu'en position de verrouillage la droite rejoignant l'articulation fixe (58) de la bielle supérieure (56) et l'articulation (60) de la bielle inférieure (57) au chariot (17) est située légèrement en-deçà de l'articulation commune (59) des deux bielles, la force de rappel (F₅) du ressort du chariot (17) s'exerçant dans un plan vertical s'étendant au-delà de l'articulation commune (59) précitée.

25. Dispositif conforme à la revendication 23, caractérisé en ce que les moyens pour appliquer une traction sur l'extrémité du levier (42) comprennent une lame (27) reliée à un bilame (31) pouvant s'incurver sous l'effet de la chaleur, cette lame (27) et cette extrémité du levier comprenant des moyens de verrouillage complémentaires (44, 41) et ce bilame (31) étant capable de réaliser sur la lame (27) une traction suffisante pour faire pivoter le levier (42) et déverrouiller celui-ci.

26. Grille-pain comportant un dispositif conforme à l'une des revendications 1 à 25.

## Claims

1. A device adaptable to a vertical-type toaster comprising a casing containing a carriage (17) to support bread slices and at least one heating resistor, whereby bimetal means (31) have been foreseen to control the displacement of the carriage of the bread slices, means (25) to lock the said carriage in lower position, electric supply means for the heating resistor, means for adjusting the heating temperature of the said resistor, means to switch off this electric supply after a certain heating duration, characterised in that the said device consists of a plate (2/15) made of an electrically insulating material, housing all the means afore mentioned, including the means to position and guide the sliding motion of the carriage (17), whereby this plate constitutes an insulating support for the electric elements of the said means, whereas the said means are pre-set and the said plate (2) comprises means for its attachment to one of the side surfaces of the said casing.

2. A device according to claim 1, characterised in that the plate (2/15) is made of plastic material and comprises protuberances or lugs (3, 4, 5, 6) moulded in the plastic material and cantilevered on one of the surfaces of the plate (2), whereby these protuberances or lugs are formed in order to accommodate and ensure the fastening of conducting elements (7, 8) or mechanical elements by translation of the latter perpendicularly to the plate (2).

3. A device according to claim 2, characterised in that the said protuberances or lugs (3, 4, 5, 6) contain bearing surfaces or slots (12, 13, 14) for receiving or nesting the said conducting (7, 8) or mechanical elements.

4. A device according to one of the claims 2 or 3, characterised in that the said elements are made of cut metallic blades (7, 8).

5. A device according to claim 4, characterised in that the lugs or protuberances (3, 4, 5, 6) exhibit bearing surfaces or slots capable of ensuring the fastening of the said blades (7, 8) by nesting, snapping or pinching of the latter, after translation of these blades perpendicularly to the external surface of the plate (2).

6. A device according to one of the claims 4 or 5, characterised in that it contains at least two metal blades (7, 8) fastened opposite each other in order to constitute an electric switch.

7. A device according to one of the claims 1 to 6, comprising a carriage (17) designed for supporting the bread slices, whereby this device exhibits means for guiding the sliding motion of the carriage (17) from one position to the other and back, as well as a spring (21) to recall the carriage towards one of those positions, characterised in that the guiding means comprise a rod (18) engaging into one or several cylindrical openings (19, 20) cut-out in the carriage (17) and in that the recall spring (21) is mounted around the rod (18) and engages into the cylindrical opening(s) (19, 20).

8. A device according to claim 7, characterised in that the upper section of the spring (21) is formed to be nesting on the upper section of the rod (18).

9. A device according to claim 7, characterised in that the lower end (23) of the spring (21) is formed so that it bears against the opening (20) adjacent to the carriage (17).

10. A device according to claim 9, characterised in that the said end of the spring (21) exhibits a wider section (23).

11. A device according to claim 10, characterised in that the end (22) of the spring (21) opposite the wider section (23) is conical in shape.

12. A device according to one of the claims 1 to 11, whereby the switching means of the electric supply of the heating resistor comprise a bimetal (31) associated with an electric heating resistor (35), adapted to allow deformation of the said bimetal (31) under the effect of the heat generated by the said resistor (35), whereas the said bimetal co-operates with an electric switch in order to switch off the electric supply of this resistor (35) upon reaching a certain level of deformation of the said bimetal (31), characterised in that the bimetal (31) is linked to a conducting blade (27) connected to the electric resistor (35) and whose end (39) opposite the latter bears elastically against a conducting element (38) linked to the electric supply, whereby this end (39) can slide over this element (38) under the effect of deformation of the bimetal (31), whereas means have been foreseen to move the blade (27) or the end (39) of the blade (27) away from the said conducting element (38) after a pre-set sliding stroke of this blade over the element afore mentioned.

13. A device according to claim 12, characterised in that the means used to move the blade (27) away, show a recess (44) cut-out in the former and an element (41) bearing against the blade (27) opposite the said conducting element (38), capable of engaging into the said recess (44) after the said pre-set sliding stroke, so that the blade (27) may bend, by an effect of elastic recall, towards the element (41) engaged into the recess (44), thus moving away from the conducting element (38).

14. A device according to one of the claims 12 or 13, characterised in that it co-operates with means to automatically control the upward motion of the carriage (17) supporting the bread slices.

15. A device according to the claims 13 and 14, characterised in that the said element (41) capable of engaging into the recess (44) of the blade (27) is part of the control mechanism (25) of the upward motion of the carriage (17), whereby the said element (41) has been arranged to control this upward motion whenever a pre-set traction is exerted upon itself.

16. A device according to claim 15, characterised in that the engaging of the said element (41) into the recess (44) of the blade (27) has been arranged to ensure a lock, so that the reverse deformation inflicted upon the bimetal (31) while cooling down, generates a traction effect upon the blade (27) as well as upon the element (41) locked to the former.

17. A device according to one of the claims 12 to 16, characterised in that the conducting blade (27) is rigid over the greatest section of its length and exhibits a narrower section at its end connected to the bimetal (31) thus enabling this blade to be flexible in that zone.

18. A device according to one of the claims 13 to 17, characterised in that the recess (44) is a window cut-out inside the blade (27).

19. A device according to one of the claims 1 to 18, comprising means (50) to adjust the operation of a bimetal (31) associated with an electric heating resistor (35) ensuring the bending motion of this bimetal, whereby one end of this bimetal co-operates with electric elements (38, 27) and with mechanical elements (25) in order to control the switching of the electric supply of the said resistor and to trigger the said mechanical means, characterised in that the other end (32) of the bimetal (31) is pivot mounted on a fixed axle (34) and carries an element (43) engaging into a slot (52) cut-out in a body (51) which is slide mounted in the direction of the length of the bimetal (31), whereby this slot (52) stretches more or less in this direction and delimitates an upper railing (53) on which bears the said element (43) when the bimetal (31) is in, or returns to, home position and a lower railing (54) on which bears the said element (43) when the bimetal (31) reaches a certain level of bending, whereas these railings (53, 54) form various slopes, pre-determined with respect to the bimetal (31).

20. A device according to claim 19, characterised in that the slope of the lower railing (54) is determined in order to adjust, by a sliding motion of the body (51), the duration of the operation of the electric supply, thus ensuring the heating of the resistor (35).

21. A device according to claim 20, characterised in that the slope of the upper railing (53) is determined in order to adjust the triggering point of the mechanical elements during the cooling phase of the resistor (35).

22. A device according to one of the claims 1 to 21, comprising mechanical means (25) for locking and unlocking a bread carriage (17), mounted to slide vertically inside the toaster, whereby these means (25) ensure the locking of the carriage (17) in lower position and the upward motion of the latter being ensured by a recall spring, and characterised in that it contains an upper arm (56) articulated to a lower rod (57), whereas the end of the upper rod (56) opposite the common articulation (59) is articulated on a fixed point (58) and the end of the lower rod (57) opposite the common articulation (59) is articulated to the carriage (17), and in that a retaining means co-operates with one rod or the other (56, 57) or with their articulation axle (59) in order to maintain temporarily the carriage (17) in lower position.

23. A device according to claim 22, characterised in that the said means is an intermediate lever (42) stretching transversally to the upper rod (56), articulated to the latter to resist the action of a spring (63), whereby the end of this lever (42) comprises a nose (24) capable to hook a fixed retaining notch (45) when the carriage (17) is brought to a lower position, whereas this lock is maintained by the load exerted towards the upper section of the recall spring of the carriage (17), while means (27, 44) have been foreseen to apply a traction (F6) to the end of the intermediate lever (42) to make the latter pivot and to unlock the nose (24) with respect to the notch (45) in order to allow the upward motion of the carriage (17).

24. A device according to claim 22, characterised in that, when in locked position, the right-hand side connecting the fixed articulation (58) of the upper rod (56) and the articulation (60) of the lower rod (57) to the carriage (17) is located slightly beneath the common articulation (59) of both rods, whereby the recall load (F5) of the spring of the carriage (17) is exerted in a vertical plane stretching beyond the common articulation (59) afore mentioned.

25. A device according to claim 23, characterised in that the means to apply a traction onto the end of the lever (42) comprise a blade (27) linked to a bimetal (31) capable of bending under the heating effect, whereas this blade (27) and this end of the lever comprise additional locking means (44, 41) and whereas this bimetal (31) is able to exert onto the blade (27) a traction sufficient to make the lever pivot (42) and to unlock the latter.

26. A toaster comprising a device according to any of the claims 1 to 25.

## Patentansprüche

1. Vorrichtung zum Einbau in einen Brotröster vom vertikalen Typ, der ein Gehäuse, das einen Wagen (17) zum Halten der Brotscheiben und mindestens einen Heizwiderstand enthält, die Bimetall-Einrichtungen (31) zum Bewirken einer Verschiebung des BrotscheibenWagens, die Einrichtungen (25) zum Verriegeln des Wagens in einer unteren Position, die Stromversorgungseinrichtungen für den Heizwiderstand, die Einrichtungen zum Regeln der Heiztemperatur des Widerstandes, und die Einrichtungen zum Unterbrechen der Stromversorgung nach einer bestimmten Heizdauer aufweist,
dadurch gekennzeichnet, daß die Vorrichtung eine aus elektrisch isolierendem Material bestehende Platte (2,15) aufweist, auf der die genannten Einrichtungen befestigt sind, zu denen die Einrichtungen zum Positionieren und Führen der Bewegung des Wagens (17) gehören, daß die Platte einen für sämtliche elektrischen Organe der genannten Einrichtungen isolierenden Halter bildet, daß die genannten Einrichtungen voreingestellt sind und daß die Platte (2) mit Einrichtungen versehen ist, mit denen sie an einer der Seitenwände des Gehäuses fixierbar ist.

2. Vorrichtung nach Anspruch 1, dadurch gekennzeichnet, daß die Platte (2,15) aus einem Plastikmaterial gefertigt ist und Vorsprünge oder Zungen (3,4,5,6) aufweist, die in dem Plastikmaterial ausgeformt sind und von einer der Flächen der Platte (2) vorstehen, wobei die Vorsprünge oder Zungen derart ausgebildet sind, daß diese konform zu den leitenden oder mechanischen Elementen (7,8) durch translatorisches Einschieben rechtwinklig zu der Platte (2) gesichert und festgehalten werden.

3. Vorrichtung nach Anspruch 2, dadurch gekennzeichnet, daß die Vorsprünge oder Zungen (3,4,5,6) Halteflächen oder Aufnahme- oder Einsteck-Spalte (12,13,14) für die leitenden oder mechanischen Elemente (7,8) aufweisen.

4. Vorrichtung nach einem der Ansprüche 2 oder 3, dadurch gekennzeichnet, daß die genannten Elemente aus gestanzten metallischen Blättern (7,8) bestehen.

5. Vorrichtung nach Anspruch 4, dadurch gekennzeichnet, daß die Zungen oder Vorsprünge (3,4,5,6) Halte-Flächen oder -Spalte aufweisen, die in der Lage sind, die Fixierung der Blätter (7,8) durch Einstecken, Einschnappen oder Einklemmen derselben zu gewährleisten, nachdem die Blätter rechtwinklig zu der Außenfläche der Platte (2) translatorisch eingeschoben worden sind.

6. Vorrichtung nach einem der Ansprüche 4 oder 5, dadurch gekennzeichnet, daß die Vorrichtung mindestens zwei metallische Blätter (7,8) aufweist, die relativ zueinander derart befestigt sind, daß sie einen elektrischen Schalter bilden.

7. Vorrichtung nach einem der Ansprüche 1 bis 6, mit einem Wagen (17) zum Halten der Brotscheiben, wobei die Vorrichtung die Einrichtungen zum Führen der Bewegung des Wagens (17) zwischen zwei Positionen und eine Feder (21) aufweist, um den Wagen in eine der beiden Positionen rückzustellen, dadurch gekennzeichnet, daß die Führungseinrichtung einen Schaft (18) aufweist, der in eine oder mehrere an dem Wagen (17) ausgebildete zylindrische Öffnungen (19,20) eingreift, und daß die Rückstellfeder (21) um den Schaft (18) herum angeordnet ist und in eine der zylindrischen Öffnungen (19,20) eingreift.

8. Vorrichtung nach Anspruch 7, dadurch gekennzeichnet, daß der obere Teil der Feder (21) derart passend ausgebildet ist, daß er auf dem oberen Teil des Schaftes (18) sitzt.

9. Vorrichtung nach Anspruch 7, dadurch gekennzeichnet, daß das untere Ende (23) der Feder (21) derart passend ausgebildet ist, daß es an der angrenzenden Öffnung (20) des Wagens (17) abgestützt ist.

10. Vorrichtung nach Anspruch 9, dadurch gekennzeichnet, daß das genannte Ende der Feder (21) eine erweiterten Abschnitt (23) aufweist.

11. Vorrichtung nach Anspruch 10, dadurch gekennzeichnet, daß das dem erweiterten Abschnitt (23) entgegengesetzte Ende der Feder (21) konisch ist.

12. Vorrichtung nach einem der Ansprüche 1 bis 11, bei der die Einrichtungen zum Unterbrechen der Stromversorgung des Heizwiderstandes ein mit einem elektrischen Heizwiderstand (35) verbundenes Bimetallelement (31) aufweist, das derart ausgebildet ist, daß unter Einwirkung der durch den Widerstand (35) erzeugten Wärme eine Verformung des Bimetalls (31) erfolgt, wobei das Bimetallelement mit einem elektrischen Schalter zusammenwirkt, um bei einem bestimmten Verformungszustand des Bimetallelementes (31) die Stromversorgung dieses Widerstandes (35) zu unterbrechen, dadurch gekennzeichnet, daß das Bimetallelement (31) an einen Leiterstreifen (27) angeschlossen ist, der mit dem elektrischen Widerstand (35) verbunden ist und dessen dem Widerstand entgegengesetztes Ende (39) elastisch an einem leitenden Organ (38) anliegt, das mit der Stromversorgung verbunden ist, wobei dieses Ende (39) unter Einwirkung der Verformung des Bimetallelementes (31) auf dem Organ (38) gleiten kann, und wobei eine Einrichtung vorgesehen ist, um das Blatt (27) oder das Ende (39) des Blattes (27) von dem leitenden Organ (38) abzurücken, nachdem das Blatt einen vorbestimmten Gleitweg auf dem Organ zurückgelegt hat.

13. Vorrichtung nach Anspruch 12, dadurch gekennzeichnet, daß die Einrichtungen zum Abrücken des Blattes eine in diesem ausgebildete Ausnehmung (44) und ein Organ (41) aufweist, das nach dem genannten vorbestimmten Gleitweg an der dem leitenden Organ (38) entgegengesetzten Seite des Blattes (39) in Anlage gelangt und in die Ausnehmung (44) eingreifen kann, derart, daß das Blatt (39) sich durch elastische Bewegung zu dem in die Ausnehmung (44) eingreifenden Organ (41) biegen und somit von dem leitenden Organ (38) abrücken kann.

14. Vorrichtung nach einem der Ansprüche 12 oder 13, dadurch gekennzeichnet, daß sie mit den Einrichtungen zur automatischen Lenkung der Aufwärtsbewegung des die Brotscheiben haltenden Wagens (17) zusammenwirkt.

15. Vorrichtung nach den Ansprüchen 14 und 13, dadurch gekennzeichnet, daß das Organ (41), das in die Ausnehmung (44) des Blattes (27) eingreifen kann, einen Teil des Lenkmechanismus (25) für die Aufwärtsbewegung des Wagens (17) bildet, wobei das Organ (41) derart angeordnet ist, daß es diese Aufwärtsbewegung lenkt, bis eine bestimmte Zugkraft auf das Organ einwirkt.

16. Vorrichtung nach Anspruch 15, dadurch gekennzeichnet, daß der Eingriff des Organs (41) in die Ausnehmung (44) des Blattes (27) zur Gewährleistung einer derartigen Verriegelung vorgesehen ist, daß die inverse Verformung, die das Bimetallelement (31) bei seiner Abkühlung erfährt, auf das Blatt (31) sowie das an diesem verriegelte Organ (41) eine Zugkraft ausübt.

17. Vorrichtung nach einem der Ansprüche 12 bis 16, dadurch gekennzeichnet, daß der Leiterstreifen (27) über den größten Teil seiner Länge hinweg starr ist und an seinem mit dem Bimetallelement (31) verbundenen Ende (30) eine Einschnürung aufweist, aufgrund derer das Blatt in diesem Bereich flexibel ist.

18. Vorrichtung nach einem der Ansprüche 13 bis 17, dadurch gekennzeichnet, daß die Ausnehmung (44) ein in dem Blatt (27) ausgebildetes Fenster ist.

19. Vorrichtung nach einem der Ansprüche 1 bis 18, mit einer Einrichtung (50) zum Einstellen der Funktion eines mit einem elektrischen Heizwiderstand (35) verbundenen Bimetallelementes (31), die die Krümmung des Bimetallelementes gewährleisten, wobei eines der Enden des Bimetallelementes mit elektrischen (38,27) und mechanischen Organen (25) zusammenwirkt, um das Unterbrechen der Stromversorgung des Widerstandes zu veranlassen und die mechanischen Organe zu entriegeln, dadurch gekennzeichnet, daß das andere Ende (32) des Bimetallelementes (31) schwenkbar an einer feststehenden Achse (34) montiert ist und ein Organ (43) trägt, das in einen Spalt (52) eingreift, der in einem in Längsrichtung des Bimetallelementes (31) verschiebbar montierten Körper (51) ausgebildet ist, wobei der Spalt (52) sich im wesentlichen in dieser Richtung erstreckt und eine obere Rampe (53), an der das Organ (43) in Anlage gelangt, wenn sich das Bimetallelement (31) in der Ruhestellung befindet oder in diese zurückkehrt, und eine untere Rampe (54) begrenzt, an der das Organ (43) in Anlage gelangt, wenn das Bimetallelement (31) einen bestimmten Krümmungszustand erreicht, wobei die Rampen (53,54) relativ zu dem Bimetallelement (31) unterschiedliche vorbestimmte Schrägungen aufweisen.

20. Vorrichtung nach Anspruch 19, dadurch gekennzeichnet, daß die Schräge der unteren Rampe (54) derart bemessen ist, daß durch Verschiebung des Körpers (51) die Dauer der Aufrechterhaltung der die Heizung des Widerstandes (35) gewährleistenden Stromversorgung einstellbar ist.

21. Vorrichtung nach Anspruch 20, dadurch gekennzeichnet, daß die Schräge der oberen Rampe (53) derart bemessen ist, daß der Punkt der Entriegelung der mechanischen Organe beim Abkühlen des Widerstandes (35) einstellbar ist.

22. Vorrichtung nach einem der Ansprüche 1 bis 21, mit einer mechanischen Einrichtung (25) zum Verriegeln oder Entriegeln eines vertikal verschiebbar in dem Brotröster montierten Brothalte-Wagens (17), wobei die Einrichtungen (25) die Verriegelung des Wagens (17) in der unteren Position gewährleistet und die Aufwärtsbewegung des Wagens durch eine Rückstellfeder erfolgt, dadurch gekennzeichnet, daß die Vorrichtung einen oberen Arm (56) aufweist, der an einem unteren Arm (57) angelenkt ist, wobei das dem gemeinsamen Anlenkungspunkt (59) entgegengesetzte Ende des oberen Arms (56) an einem festen Punkt (58) angelenkt ist und das dem gemeinsamen Anlenkungspunkt (59) entgegengesetzte Ende des unteren Arms (57) an den Wagen (17) angelenkt ist, und dadurch, daß eine Rückhalteeinrichtung mit dem einen oder dem anderen Arm (56,57) oder mit deren Anlenkungsachse (59) zusammenwirkt, um den Wagen (17) zeitweilig in der unteren Position zu halten.

23. Vorrichtung nach Anspruch 22, dadurch gekennzeichnet, daß die genannte Einrichtung ein Zwischenhebel (42) ist, der quer zu dem oberen Arm (56) verläuft und gegen die Wirkung einer Feder (63) an diesem angelenkt ist, wobei das Ende dieses Hebels (42) einen Vorsprung (24) aufweist, der in einer feststehenden Anschlag (45) einrasten kann, wenn der Wagen (17) in die untere Position versetzt wird, wobei diese Verriegelung durch die auf das Oberende der Rückstellfeder des Wagens (17) ausgeübte Kraft beibehalten wird, und wobei eine Einrichtung (27,44) vorgesehen ist, um eine Zugkraft (F₆) auf das Ende des Zwischenhebels (42) auszuüben und somit diesen zu verschwenken und den Vorsprung (24) aus der Nut (45) auszurücken, damit sich der Wagen (17) aufwärtsbewegen kann.

24. Vorrichtung nach Anspruch 22, dadurch gekennzeichnet, daß in der Verriegelungsposition die Gerade, die den festen Anlenkungspunkt (58) des oberen Arms (56) und den an dem Wagen (17) befindlichen Anlenkungspunkt (60) des unteren Arms (57) verbindet, geringfügig diesseits des gemeinsamen Anlenkungspunktes (59) der beiden Arme liegt, wobei die Rückstellkraft (F₅) der Feder des Wagens (17) in einer vertikalen Ebene zur Wirkung kommt, die jenseits des gemeinsamen Anlenkungspunktes (59) verläuft.

25. Vorrichtung nach Anspruch 23, dadurch gekennzeichnet, daß die zum Aufbringen einer Zugkraft auf das Ende des Hebels (42) vorgesehene Einrichtung ein Blatt (27) aufweist, das mit einem Bimetallelement (31) verbunden ist, welches sich unter Einwirkung von Wärme krümmen kann, wobei dieses Blatt (27) und dieses Ende des Hebels komplementäre Verriegelungseinrichtungen (44,41) aufweisen und das Bimetallelement (31) eine hinreichende Zugkraft auf das Blatt (27) ausüben kann, um den Hebel (42) zu verschwenken und zu entriegeln.

26. Brotröster mit einer Vorrichtung nach einem der Ansprüche 1 bis 25.
